# FASCICULE DE BREVET EUROPEEN

(11) **EP 0 659 348 B1**
(45) Date de publication et mention de la délivrance du brevet: **08.12.1999**
(21) Numéro de dépôt: 93120603.1
(22) Date de dépôt: 21.12.1993
(51) Int. Cl.: A23G 9/26

(54) **Dispositif de transfert d'un élément d'un ensemble de moulage dans une opération de moulage de petits articles**
Transportvorrichtung für ein Element von einer Formeinrichtung in eine Formoperation für kleine Gegenstände
Apparatus for transferring an element of a mold assembly in an operation for molding small articles

(43) Date de publication de la demande: 28.06.1995
(73) Titulaire: Société des Produits Nestlé S.A., 1800 Vevey (CH)
(72) Inventeur: Delande, Bruno, F-60690 Marseille-en-Beauvaisis (FR); Liegaux, Claude Georges, F-60000 Beauvais (FR)
(74) Mandataire: Archambault, Jean

(56) Documents cités:
- EP-A- 0 506 987
- FR-A- 2 502 467
- FR-A- 2 537 845
- US-A- 4 318 563

## Description

L'invention concerne un dispositif de transfert d'un élément d'un ensemble de moulage dans une opération de moulage de petits articles, permettant la prise et la repose verticales d'une première pièce mécanique, un contre-moule, complémentaire et séparable d'une seconde pièce mécanique contenant la première pièce, un moule maître, les dites pièces constituant un ensemble de moulage.

Lors du moulage de petits articles, notamment de confiserie glacée, avec ou sans bâtonnet, dits "indémoulables", par exemple parce qu'ils présentent une partie convexe, on est contraint de séparer ou d'écarter les différentes parties de l'ensemble de moulage pour démouler les articles.

La demande de brevet européen no 93105076.9 se rapporte à un procédé, un appareil et un ensemble de moulage de petits articles de confiserie glacée du type indiqué précédemment, dans lequel le système de transport des éléments de moulage comprend des moules maîtres solidaires d'une plaque constituant les rangées de moules maîtres, la dite plaque étant articulée sur une première chaîne sans fin, des contre-moules indépendants, des pinces d'extraction solidaires d'une barre articulée sur une deuxième chaîne sans fin et une barre associée aux contre-moules dont le rôle est le guidage des contre-moules vers une station de lavage.

Un tel appareil permet donc la prise du contre-moule pour le démoulage des articles, la repose du contre-moule dans le moule maître et le guidage de l'ensemble de moulage vers une station de lavage.

Les plaques de moules en utilisation industrielle finissent par présenter un état de fatigue caractérisé par une déformation par flexion consistant en une flèche qui peut être de plusieurs mm en leur milieu. Les contre-moules qui épousent les moules maîtres vont alors admettre une différence de niveau qui peut empécher pour certains d'entre eux, notamment ceux qui sont placés au milieu ou aux extrémités de la plaque, d'être saisis correctement par les pinces et d'être replacés dans la bonne position dans les moules maîtres.

L'invention a pour but de remédier aux défauts ci-dessus. Ainsi, le dispositif doit assurer une extraction fiable du contre-moule, une repose du contre-moule rapide et précise dans le moule maître et un maintien stable de celui-ci en place dans le moule maître sans jeu ni vibration.

La présente invention a donc pour objet un dispositif de transfert perfectionné remplissant le même rôle, susceptible d'être utilisé dans le procédé ci-dessus, mais dans un contexte de production à cadence plus élevée, lorsqu'un grand nombre d'ensembles de moules maîtres et de contre-moules sont assemblés en rangées successives pour constituer un système de transport dans une machine de congélation en ligne à haute cadence et à fiabilité élevée.

Le dispositif selon l'invention est caractérisé par les caractéristiques de la deuxième partie de la revendication 1.

Les moyens de pincement comprennent une barre dont la face interne plane sensiblement verticale constitue la mâchoire fixe d'une pince,
un mors plan constituant la mâchoire pivotante de la dite pince, articulé sur une contre-barre autour d'un axe horizontal traversant la dite contre-barre, barre et contre-barre définissant des espaces libres entre des entretoises les reliant,
un levier coudé solidaire du mors et muni d'un ressort de rappel pour maintenir le mors contre la mâchoire fixe en position d'extraction, le dit levier agissant contre le ressort de rappel pour ouvrir la pince en position de dépose.

Les moyens de blocage consistent en un cadre rigide fixé à la barre, supportant des poussoirs verticaux sur ressorts de compression,
servant de butées contre l'extrémité supérieure des barrettes de contre-moule, les dits poussoirs coopérant avec des encoches sur les barrettes et avec le mors pour maintenir le contre-moule sans degré de liberté aussi bien verticalement qu'horizontalement.

Les barrettes sont pourvues d'au moins une partie plane verticale, d'au moins une pente de glissement et d'au moins une contre-pente d'arrêt, pente et contre-pente définissant une encoche profilée qui coopère avec le mors pour plaquer le contre-moule contre la face interne de la barre d'extraction.

Les moyens d'éjection rapide des contre-moules lors de leur dépose lors de l'ouverture de la pince résultent des effets combinés du dégagement du mors hors des encoches et de la détente des ressorts de compression agissant sur les butées, ce qui a pour conséquence de chasser les barrettes vers le bas.

Les moyens fixes de guidage des contre-moules en retour vers la station de lavage à distance des moules maîtres sont constitués par des glissières fixes situées sous le brin de retour de la première chaîne.

L'invention sera mieux comprise au moyen de la description détaillées ci-après faite en regard des dessins annexés illustrant une forme d'exécution de l'invention donnée à tittre d'exemple.

Dans les dessins,
Les figures 1, 2 et 3 sont une vue de face partielle, une vue en coupe A et une vue de dessus en coupe B d'une pince d'extraction avec les contre-moules,
Les figures 4, 5 et 6 sont une vue de face partielle, une vue en coupe C et une vue de dessus en coupe D d'une variante d'une pince d'extraction avec les contre-moules,
La figure 7 est une coupe d'une variante de la pince,
La figure 8 est une représentation d'un mors,
La figure 9 représente en coupe une pince avec une variante des barrettes de contre-moule,
Les figures 10, 11, 12 et 13 représentent en coupe des moyens de guidage des moules maîtres et des contre-moules sur le brin de retour de la chaîne,
La figure 14 représente une variante de mors et
Les figures 15, 16, 17, 18 et 19 représentent en coupe les séquences d'extraction et de repose des contre-moules.

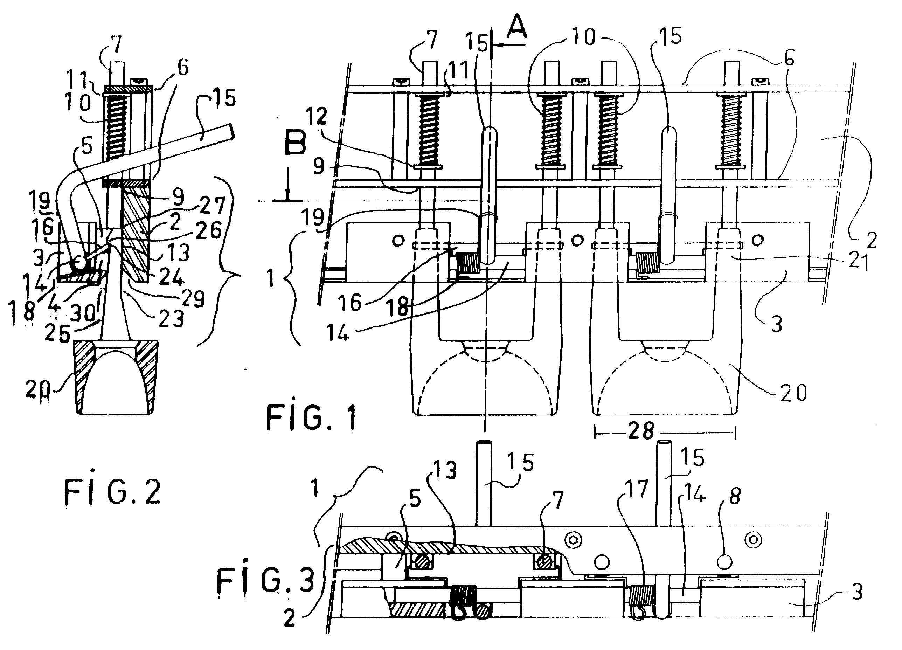

Aux figures 1 à 3, une pince d'extraction 1 comprend une barre 2 et une contre-barre 3 parallèles, séparées par des espaces libres 4 et reliées entre elles par des entretoises 5. Sur la partie supérieure de la barre 2 est fixé un cadre 6 dont le rôle est de rigidifier la barre 2 et qui sert de support à des poussoirs 7 en forme de tiges, guidés verticalement dans des orifices 8 et 9 percés dans le cadre 6. Les poussoirs 7 sont pourvus de ressorts 10 de compression entre la rondelle 11 et la collerette 12 fixée sur la tige. La face interne 13 de la barre 2 constitue la mâchoire fixe de la pince.

La contre-barre 3 est traversée de part en part par un axe 14 horizontal auquel sont fixés perpendiculairement des leviers 15 coudés. Un mors 16, également fixé sur l'axe 14, pivote autour de celui-ci et est maintenu plaqué vers le bas par le ressort de rappel 17 hélicoïdal enroulé autour de l'axe 14 dont un brin 18 s'appuie sur la contre-barre 3 et l'autre brin 19 prend sur le levier 15. Le mors constitue la mâchoire mobile de la pince.

Le contre-moule 20 est pourvu de barrettes 21. Les barrettes 21 sont adaptées à la pince d'extraction de la façon suivante: elles sont pourvues d'un dos 23 plan, vertical, qui sert d'appui sur la face interne 13 de la barre 2 et comportent chacune une encoche 24, spécialement profilée par une pente 25, de glissement et une contre-pente 26, d'arrêt qui coopérent avec le mors 16. Elles se terminent par une face 27, plane et horizontale qui vient buter sur l'extrémité des poussoirs 7. De plus, l'empattement 28 des barrettes 21 est inférieur à la grande largeur du mors 16. Un espace 4 entre la face interne 13 de la barre 2 et l'axe 14, de pivotement de la pince est supérieur à l'épaisseur d'une barrette 21 et suffisant pour permettre son passage entre les deux mâchoires de la pince. A cet effet, la barre 2 et la contre-barre 3 présentent des chanfreins 29 et 30 à leur partie inférieure pour guider les barrettes dans la pince.

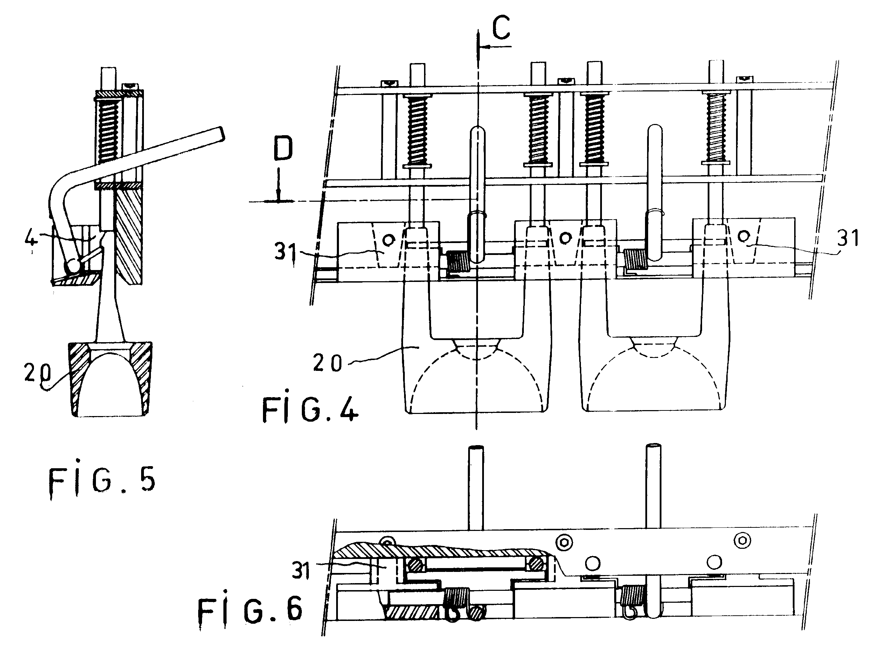

Dans la variante représentée aux figures 4, 5 et 6, les entretoises 5 sont remplacées par les queues d'aronde 31 qui ont le double rôle de fixer la barre 2 à la contre-barre 3 et, de par leur forme conique inverse, de guider latéralement le contre-moule 20 dans l'espace 4.

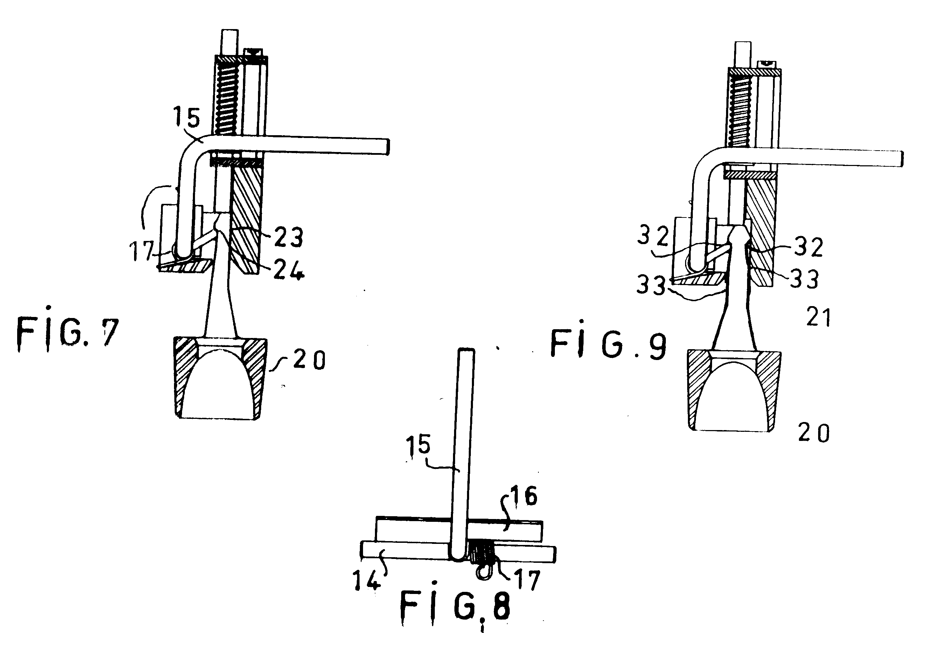

A la figure 7, le levier 15 a son bras horizontal en position d'extraction au lieu que celui-ci ne soit incliné (fig. 2 et 5).

Dans la variante de la figure 9, les barrettes 21 possèdent deux encoches 32 dos à dos et, dans leur partie inférieure, deux plans d'appui 33, verticaux, qui jouent le même rôle que l'encoche 24 et le dos 23, à la différence près que dans cette version, les contre-moules 20 peuvent se présenter indifféremment dans un sens ou dans l'autre.

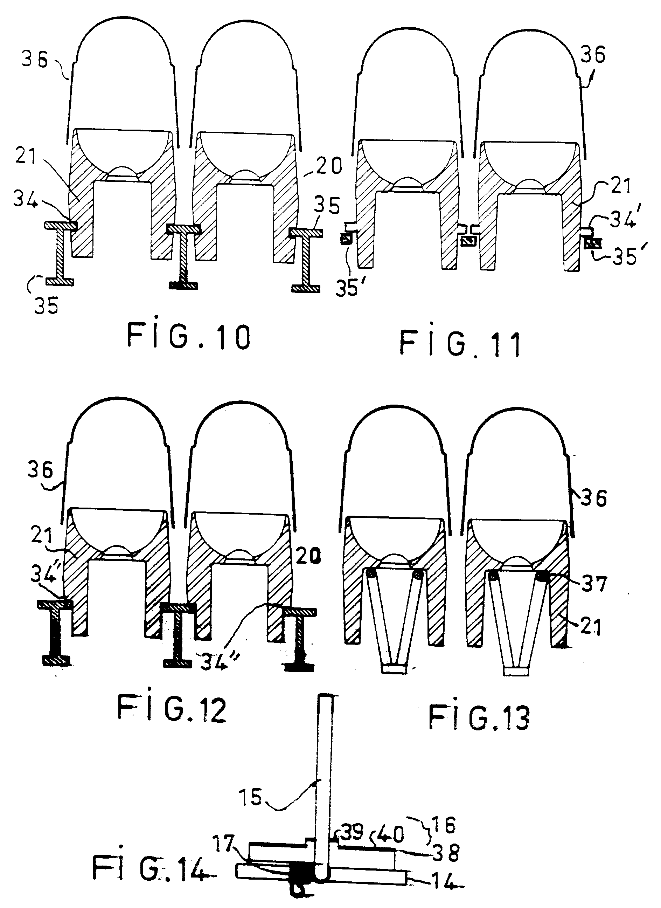

Comme représenté à la figure 10, les barrettes 21 présentent chacune une encoche 34, tournée vers l'extérieur. Les encoches 34 ont pour fonction de supporter le contre-moule 20 en position inversée en venant au contact des rails 35, fixes et individuels qui commencent à l'extérieur de la courbure de retour du brin de chaîne et accompagnent le contre-moule jusqu'à la station de lavage non représentée. Ces rails 35 sont profilés de manière à maintenir les contre-moules 20 à une distance obligée des moules maîtres 36. Ainsi, les contre-moules 20 ne peuvent pas être repoussés contre les moules maîtres 36, par exemple sous l'effet des jets de lavage (non représentés). Les encoches 34 peuvent être remplacées par des ergots (34', fig. 11) ou encore par des décrochements latéraux (34'', fig.12) sur les barettes, vers l'extérieur. Dans le cas de la figure 11, les rails 35 sont remplacés par des glissières (35') adaptées aux dits ergots.

Dans la variante de la figure 13, deux tringles 37 de section en rond plein supportent le contre-moule sur le brin de retour de la chaîne et le guident à l'intérieur des barrettes qui, dans ce cas, ne comportent pas d'encoche, d'ergot ou de décrochement.

A la figure 14, le mors 16 présente un bord 38 dont la partie centrale 39 est plus large que les côtés 40, lesquels se situent au même niveau que le bord du mors précédent tel qu'on le voit à la figure 8. Ainsi équipée, une pince peut saisir indifféremment les barrettes d'un contre-moule ou le bâtonnet d'une sucette, ce qui présente l'avantage que les pinces n'ont pas besoin d'être différenciées, le mors étant à double usage.

Le dispositif fonctionne de la manière suivante:

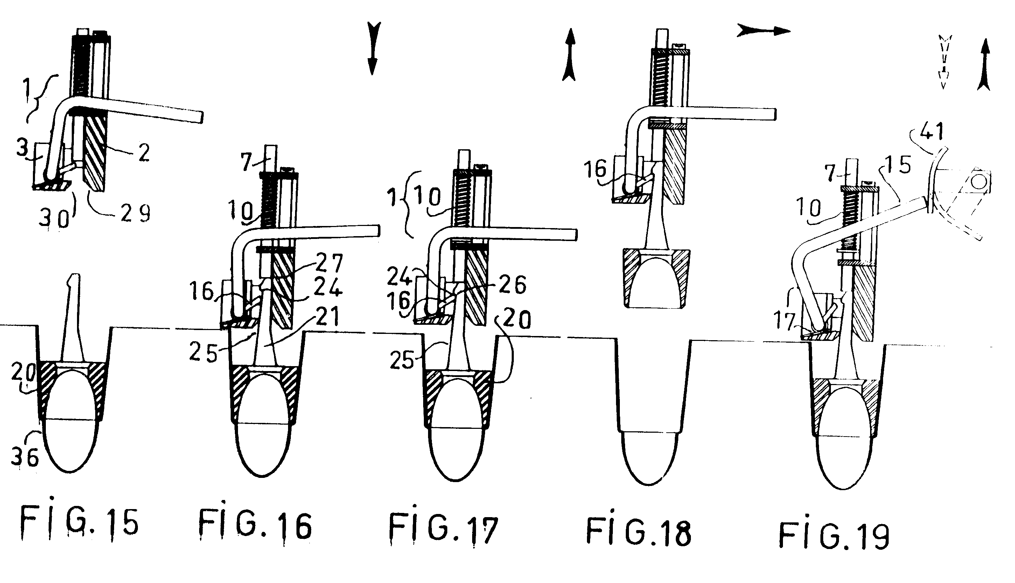

A la figure 15, une pince d'extraction 1 descend. Le léger décalage de position qui pourrait exister entre une plaque de moule maître 36 de la première chaîne et une barre 2 de la seconde chaîne est compensé par une ouverture suffisante de la pince. Les bords chanfreinés (29, 30) des faces internes des barre et contre-barre garantissent l'insertion des barrettes.

A la figure 16, le mors 16 de la pince descend à un niveau plus bas que le haut de l'encoche 24 mais reste toujours situé quelque part dans la pente 25 de l'encoche qui sert de plan de glissement. Le niveau atteint varie selon les contre-moules de par leur position par rapport à la plaque de moules. La face supérieure 27 des barrettes 21 vient buter contre la partie basse des poussoirs 7 et comprime les ressorts 10. Les barrettes 21 sont alors encliquetées.

Comme montré à la figure 17, les ressorts 10 se détendent au cours de la remontée de la pince 1 et repoussent ainsi le contre-moule 20 vers le bas car le mors 16 glisse sur la pente 25 de l'encoche 24. Il se bloque au niveau d'arrêt sur la contre-pente 26 de l'encoche 24. Les contre-moules 21 sont ainsi repositionnés de manière parfaitement horizontale.

A la figure 18, les barrettes 21, encliquetées, maintiennent en place le contre-moule 20 de manière stable et précise. Celui-ci est bloqué dans quatre sens, en haut, en bas, en avant et en arrière sous l'action du mors 16 qui ne pourrait s'échapper que vers le haut. Ainsi, il ne pourra pas se mettre en travers lors de son transfert et de sa réinsertion dans le moule maître 36.

A la figure 19, le contre-moule est reposé dans le moule-maître, puis libéré. Après extraction des produits et avance des moules maîtres vides, les contre-moules doivent être descendus et reposés dans les moules maîtres. Pour ce faire, le levier 15 bute sur la came 41, mobile et déplacée vers le haut en position d'action (la position de repos de la came 41 est indiquée en pointillés). Cette came peut être remplacée par un plan incliné, fixe (non représenté). La came 41 amène le levier 15 à pivoter dans le sens contraire des aiguilles d'une montre et à agir contre le ressort de rappel 17. La pince s'ouvre alors avant même que le monte et baisse (non représenté) qui la prend en charge soit en position basse, ce qui libère les contre-moules. Par l'action des ressorts 10 de compression des poussoirs 7, le contre-moule est éjecté de la pince, ce qui assure une libération rapide compatible avec la cadence élevée de la machine. En effet, le délai de glissement des contre-moules hors des pinces est alors supprimé.

Le monte et baisse impliqué dans la repose du contre-moule correspond à C de la demande de brevet européen no 93105076.9. Il est de préférence piloté indépendamment des monte et baisse A et B de cette même demande de brevet bien qu'étant synchonisé avec eux, en ce sens que sa course est réglable et indépendante de celle des monte et baisse A et B.

Dans la description précédente, une pince d'extraction telle que représentée à la figure 1 ou 4, porte deux contre-moules pour des raisons de simplification de la représentation. Bien entendu, les explications données restent valables pour une machine comportant des plaques articulées sur la première chaîne contenant 4 à 12 moules et des pinces correspondantes pour 4 à 12 contre-moules articulées sur la seconde chaîne. Dans le cas de plaques contenant 12 moules par exemple, on peut prévoir des barres longitudinales de sécurité limitant la flèche. Le cadre rigidificateur portant les poussoirs peut avantageusement comporter des entretoises à intervalles réguliers pour assurer une bonne rigidité de la barre d'extraction.

## Revendications

1. Dispositif de transfert d'un élément d'un ensemble de moulage dans une opération de moulage de petits articles, permettant la prise et la repose verticales d'une première pièce mécanique, qui constitue un contre-moule, complémentaire et séparable d'une seconde pièce mécanique contenant la première pièce, qui constitue un moule maître, les dites pièces constituant un ensemble de moulage, caractérisé par le fait qu'il comprend:
au moins un tel ensemble de moulage,
des moyens (1) de pincement sans jeu des contre-moules (20),
des moyens de blocage (6) des contre-moules (20) en position horizontale sur un même niveau indépendamment de la courbure des plaques de moules,
des moyens d'éjection rapide (10) des contre-moules lors de leur dépose et
des moyens fixes de guidage (35) des contre-moules en retour vers la station de lavage à distance des moules maîtres,
et que les contre-moules (20) comprennent des barrettes (21) coopérant avec les moyens de pincement, de blocage, d'éjection et de guidage.

2. Dispositif selon la revendication 1, caractérisé par le fait que les moyens (1) de pincement comprennent une barre (2) dont la face (13) interne plane sensiblement verticale constitue la mâchoire fixe d'une pince (1),
un mors (16) plan constituant la mâchoire pivotante de la dite pince (1), articulé sur une contre-barre (3) autour d'un axe horizontal (14) traversant la dite contre-barre (3), barre (2) et contre-barre (3) définissant des espaces libres (4) entre des entretoises (5) les reliant,
un levier coudé (15) solidaire du mors (16) et muni d'un ressort (17) de rappel pour maintenir le mors (16) contre la mâchoire fixe en position d'extraction, le dit levier (15) agissant contre le ressort (17) de rappel pour ouvrir la pince (1) en position de dépose.

3. Dispositif selon la revendication 1 caractérisé par le fait que les moyens de blocage consistent en un cadre rigide (6) fixé à la barre (2), supportant des poussoirs (7) verticaux sur ressorts (10) de compression,
servant de butées contre l'extrémité supérieure des barrettes (21) de contre-moule (20), les dits poussoirs (7) coopérant avec des encoches (24) sur les barrettes (21) et avec le mors (16) pour maintenir le contre-moule (20) sans degré de liberté aussi bien verticalement qu'horizontalement.

4. Dispositif selon la revendication 1, caractérisé par le fait que les barrettes (21) sont pourvues d'au moins une partie plane verticale, d'au moins une pente (25) de glissement et d'au moins une contre-pente (26) d'arrêt, pente (25) et contre-pente (26) définissant une encoche (24) profilée qui coopère avec le mors (16) pour plaquer le contre-moule (20) contre la face interne (13) de la barre d'extraction (2).

5. Dispositif selon les revendications 1 et 4, caractérisé par le fait que les barrettes (21) sont pourvues de deux parties planes (23) verticales et de deux encoches (24) disposées dos à dos.

6. Dispositif selon la revendication 1, caractérisé par le fait que les moyens d'éjection rapide des contre-moules (20) lors de leur dépose lors l'ouverture de la pince (1) résultant des effets combinés du dégagement du mors (16) hors des encoches (24) et de la détente des ressorts (10) de compression agissant sur les butées, ce qui a pour conséquence de chasser les barrettes (21) vers le bas.

7. Dispositif selon la revendication 1, caractérisé par le fait que les moyens (35,35') fixes de guidage des contre-moules (20) en retour vers la station de lavage à distance des moules maîtres (36) sont constitués par des glissières (35) fixes situées sous le brin de retour de la première chaîne et positionnées entre les barrettes (21).

8. Dispositif selon la revendication 7, caractérisé par le fait que les moyens fixes (35') de guidage sont positionnés à l'extérieur des barrettes (21) et coopérent avec des encoches, tenons (34') ou décrochements fixés sur les barrettes (21) vers l'extérieur.

## Claims

1. Device for transferring a component of a moulding assembly in an operation for moulding small articles, making possible the vertical picking up and replacing of a first mechanical piece, which constitutes a countermould, complementary to and separable from a second mechanical piece containing the first piece, which constitutes a main mould, the said pieces constituting a moulding assembly, characterised in that it comprises:
at least one moulding assembly of this type, means (1) for gripping the countermoulds (20) without play,
means (6) for locking the countermoulds (20) in the horizontal position on the same level independently of the curvature of the mould plates,
means (10) for rapidly ejecting the countermoulds when they are removed, and fixed means (35) for guiding the countermoulds returning to the washing station at a distance from the main moulds,
and in that the countermoulds (20) comprise studs (21), which cooperate with means for gripping, locking, ejection and guiding.

2. Device according to Claim 1, characterised in that the gripping means (1) comprise a bar (2), the substantially vertical flat inner face (13) of which constitutes the fixed clamp of a gripper (1),
a flat jaw (16) constituting the pivoting clamp of the said gripper (1), articulated on a counter-bar (3) about a horizontal shaft (14) passing through the said counter-bar (3), the bar (2) and counter-bar (3) defining clear spaces (4) between struts (5) connecting them, an angled lever (15) fixed to the jaw (16) and equipped with a return spring (17) to hold the jaw (16) against the fixed clamp in the extraction position, the said lever (15) acting against the return spring (17) to open the gripper (1) in the removal position.

3. Device according to Claim 1, characterised in that the locking means consist of a rigid frame (6) fixed to the bar (2), supporting vertical pushers (7) on compression springs (10),
serving as stops against the top end of the studs (21) of the countermould (20), the said pushers (7) cooperating with notches (24) on the studs (21) and with the jaw (16) to hold the countermould (20) without any degree of freedom both vertically and horizontally.

4. Device according to Claim 1, characterised in that the studs (21) are provided with at least one flat vertical part, with at least one sliding slope (25) and at least one stopping counter-slope (26), the slope (25) and counterslope (26) defining a profiled notch (24) which cooperates with the jaw (16) to press the countermould (20) against the inner face (13) of the extraction bar (2).

5. Device according to Claims 1 and 4, characterised in that the studs (21) are provided with two flat vertical parts (23) and two notches (24) disposed back to back.

6. Device according to Claim 1, characterised in that means for rapidly ejecting the countermoulds (20) when they are removed during the opening of the gripper (1) result from the combined effects of the disengagement of the jaw (16) from the notches (24) and from the expansion of the compression springs (10) acting on the stops, which has the consequence of driving the studs (21) downwards.

7. Device according to Claim 1, characterised in that the fixed means (35,35') for guiding the countermoulds (20) returning to the washing station at a distance from the main moulds (36) consist of fixed runners (35) situated under the return run of the first chain and positioned between the studs (21).

8. Device according to Claim 7, characterised in that the fixed guiding means (35') are positioned outside the studs (21) and cooperate with notches, snugs or shoulders (34') fixed on the studs (21) towards the outside.

## Patentansprüche

1. Vorrichtung für den Transport eines Elements einer Formeinrichtung in einem Arbeitsgang der Formung von kleinen Artikeln, die die vertikale Ergreifung und Ablage eines ersten mechanischen Teils gestattet, das eine Gegenform bildet, die ein zweites mechanisches Teil, das das erste Teil enthält und eine Hauptform bildet, ergänzt und von diesem trennbar ist, wobei diese beiden Teile eine Formeinrichtung bilden, dadurch gekennzeichnet, daß sie umfaßt: mindestens eine solche Formeinrichtung,
Mittel (1) zum spielfreien Einklemmen der Gegenformen (20), Mittel (6) zum Blockieren der Gegenformen (20) in horizontaler Stellung auf einer gemeinsamen Höhe unabhängig von der Krümmung der Formenplatte,
Mittel (10) zum schnellen Ausstoß der Gegenformen bei ihrer Ablage und
feststehende Mittel (35) zur Führung der Gegenformen in Rückbewegung zur Waschstation in einer Entfernung von den Hauptformen,
und daß die Gegenformen (20) Stangen (21) aufweisen, die mit den Mitteln zum Einklemmen, Blockieren, Ausstoßen und Führen Zusammenwirken.

2. Vorrichtung nach Anspruch 1, dadurch gekennzeichnet, daß die Mittel (1) zum Einklemmen eine Schiene (2) aufweisen, deren im wesentlichen vertikale ebene Innenseite (13) die feststehende Backe einer Zange (1) bildet,
eine ebene Spannbacke (16), die die verschwenkbare Backe der Zange (1) bildet und an einer Gegenschiene (3) über eine diese durchquerende horizontale Achse (14) angelenkt ist, wobei die Schiene (2) und die Gegenschiene (3) zwischen sie verbindenden Stegen (5) freie Räume (4) abgrenzen,
einen gebogenen Hebel (15), der mit der Spannbacke (16) fest verbunden ist und mit einer Rückholfeder (17) versehen ist, um die Spannbacke (16) in der Auszugsstellung gegen die feststehende Backe gedrückt zu halten, wobei der Hebel (15) entgegen der Rückholfeder (17) wirkt, um die Zange (1) in der Ablagestellung zu öffnen.

3. Vorrichtung nach Anspruch 1, dadurch gekennzeichnet, daß die Blockiermittel aus einem an der Schiene (2) befestigten starren Rahmen (6) bestehen, der vertikale Drücker (7) auf Druckfedern (10) trägt, die als Anschläge am oberen Ende der Stangen (21) der Gegenformen (20) dienen, wobei die Drücker (67) mit Einkerbungen (24) auf den Stangen (21) und mit der Spannbacke (16) zusammenwirken, um die Gegenform (20) ohne Freiheitsgrad sowohl vertikal als auch horizontal zu halten.

4. Vorrichtung nach Anspruch 1, dadurch gekennzeichnet, daß die Stangen (21) mit mindestens einem vertikalen ebenen Bereich, mindestens einer Gleitneigung (25) und mindestens einer Sperrgegenneigung (26) versehen sind, wobei die Neigung (25) und die Gegenneigung (26) eine profilierte Einkerbung (24) bilden, die mit der Spannbacke (16) zusammenwirkt, um die Gegenform (20) gegen die Innenseite (13) der Auszugsschiene (2) zu drücken.

5. Vorrichtung nach den Ansprüchen 1 und 4, dadurch gekennzeichnet, daß die Stangen (21) mit zwei ebenen vertikalen Bereichen (23) und mit zwei Einkerbungen (24) versehen sind, die Rücken an Rücken angeordnet sind.

6. Vorrichtung nach Anspruch 1, dadurch gekennzeichnet, daß die Mittel zum schnellen Ausstoßen der Gegenformen (20) bei ihrer Ablage bei der Öffnung der Zange (1) sich aus den kombinierten Wirkungen des Austretens der Spannbacke (16) aus den Einkerbungen (24) und der Entspannung der auf die Anschläge einwirkenden Druckfedern (10) ergeben, was zur Folge hat, daß die Stangen (21) nach unten getrieben werden.

7. Vorrichtung nach Anspruch 1, dadurch gekennzeichnet, daß die feststehenden Mittel (35, 35') zur Führung der Gegenformen (20) in Rückbewegung zur Waschstation in einer Entfernung von den Hauptformen (36) aus feststehenden Gleitführungen (35) bestehen, die unter dem rückkehrenden Trum der ersten Kette angeordnet und zwischen den Stangen (21) positioniert sind.

8. Vorrichtung nach Anspruch 7, dadurch gekennzeichnet, daß die feststehenden Führungsmittel (35') außerhalb der Stangen (21) positioniert sind und mit Einkerbungen, Erhebungen (34') oder Abstufungen zusammenwirken, die auf den Stangen (21) außen vorgesehen sind.
